# EUROPÄISCHE PATENTSCHRIFT

(11) **EP 1 980 144 B1**
(45) Veröffentlichungstag und Bekanntmachung des Hinweises auf die Patenterteilung: **01.09.2010**
(21) Anmeldenummer: 08007180.6
(22) Anmeldetag: 11.04.2008
(51) Int. Cl.: A01D 89/00

(54) **Landwirtschaftliche Erntemaschine**
Agricultural harvester
Moissonneuse agricole

(30) Priorität: 13.04.2007 DE 102007017911
(43) Veröffentlichungstag der Anmeldung: 15.10.2008
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE); Ester, Markus, Dipl.-Ing, 48480 Lünne (DE); Behmenburg, Hubertus, Dipl.-Ing., 48703 Stadtlohn (DE)

(56) Entgegenhaltungen:
- EP-A- 0 779 023
- EP-A- 0 903 077
- DE-A1- 3 501 364
- FR-A- 2 600 858
- US-A- 3 523 412
- US-A- 4 189 907

## Beschreibung

Die Erfindung bezieht sich auf eine landwirtschaftliche Erntemaschine mit einer Aufnahmeeinrichtung zur Aufnahme von auf einer Feld- und Wiesenfläche liegendem Erntegut. Aufnahmeeinrichtungen dieser Art sind in Vielfältigen Ausführungsformen bekannt und werden beispielsweise an Feldhäckslern, Ballenpressen; Ladewagen oder dgl. landwirtschaftlichen Erntemaschinen eingesetzt. Bei derartigen Aufnahmeeinrichtungen werden Förderzinken, die in einer Vielzahl von zur Fahrtrichtung parallelen Ebenen auf vorgegebenen Bahnen angetrieben umlaufen und sich dabei in Zwischenräumen bewegen, welche von einer Vielzahl von Seite an Seite quer zur Fahrtrichtung angeordneten Abstreiferblechen gebildet sind. Die Aufnahme und die Förderung des Erntegutes erfolgt durch die umlaufenden Förderzinken, die das Erntegut an der Oberseite der Abstreiferbleche führen und es dabei nachfolgenden Erntegutbearbeitungseinrichtungen aufgeben.

Die DE 36 21 995 A1 zeigt und beschreibt einen Aufsammler für Halmguterntemaschinen, bei dem die umlaufend angetriebenen Zinken nicht wie vorstehend dargelegt, in parallel zur Fahrtrichtung ausgerichteten Ebenen umlaufen, sondern die Umlaufebenen der Zinken sind hier so ausgerichtet, dass die Breite des aufgenommenen Erntegutschwades nach der Aufnahme vom Boden auf dem Förderweg zu nachfolgenden Gutbearbeitungseinrichtungen reduziert wird. Die Ebenen sind dazu leicht schräg ausgerichtet, so dass die seitlichen Abstände zwischen den Zinken auf ihrem Förderweg kleiner werden. Weiterhin ist es dieser Offenbarung zu entnehmen, dass quer zur Fahrtrichtung benachbarte Zinken in ihrer Bewegungsrichtung derartig versetzt zueinander angeordnet sind, dass der Prozess des Zusammenführens des Erntegutschwades unterstützt wird. Der hier offenbarte Aufsammler ist mit den Nachteilen behaftet; dass aufgrund der großen Anzahl mechanisch bewegter bzw. zu steuernder Teile die Herstellkosten sowie die Reparaturanfälligkeit als sehr hoch anzusehen sind.

Erkenntnissen aus dem praktischen Einsatz zufolge sind die aufzunehmenden Emtegutschwade häufig jedoch so geformt, dass sich das meiste Erntegut in der Mitte befindet. Zur optimalen Auslastung heutiger Erntemaschinen wünscht man sich jedoch ein Erntegutschwad, welches auf der Breite der Einzugsorgane der das Erntegutschwad aufnehmenden Erntemaschinen etwa die gleiche Schwadhöhe aufweist. Anhand dieser Erkenntnisse ist es wünschenswert, wenn Aufnahmeeinrichtungen bei der Aufnahme des Erntegutschwades auf das Erntegut im mittleren Bereich eine verteilende Wirkung ausüben, während in den äußeren Bereichen des Erntegutschwades eine zusammenziehende Wirkung zu erzielen ist.

Die Merkmale des Oberbegriffes sind aus der EP-A-0 903 077 bekannt.

Aufgabe der Erfindung ist es daher, eine landwirtschaftliche Erntemaschine mit einer kostengünstigen Aufnahmeeinrichtung und verbesserten Förder- und Verteileigenschaften bereitzustellen. Der vom Benutzer aufzubringende Reparatur- und Wartungsaufwand soll dabei möglichst gering gehalten werden.

Zur Lösung der gestellten Aufgabe zeichnet sich die landwirtschaftliche Erntemaschine der vorstehend genannten Art durch die im Anspruch 1 angegebenen Merkmale aus. Hinsichtlich der weiteren Ausgestaltung der Erfindung wird auf die Unteransprüche verwiesen.

Erfindungsgemäß wird eine landwirtschaftliche Erntemaschine mit einer Gutaufnahmeeinrichtung zur Aufnahme von auf einer Feld- und Wiesenfläche liegendem Erntegut und zur Weitergabe an eine nachfolgende Gutbearbeitungseinrichtung bereitgestellt, welche mit einer Vielzahl von zur Aufnahme des Erntegutes um eine etwa horizontal und quer zur Fahrt- und Arbeitsrichtung ausgerichtete Achse auf einer vorgegebenen Bahn angetrieben bewegbaren und versetzt zueinander angeordneten Förderzinken versehen sind, wobei die Förderzinken mit einer Vielzahl von Abstreiferblechen zusammenwirken, die Seite an Seite quer zur Fahrt- und Arbeitsrichtung angeordnet sind und somit zwischen den jeweiligen Abstreiferblechen Zwischenräume bilden, durch die die Förderzinken von innen nach außen hervorragen und das Erntegut an der Oberseite der Abstreiferbleche entlang führen, wobei die Förderzinken auf der Oberfläche eines rohrförmig gestalteten und um die etwa horizontal und quer zur Fahrt- und Arbeitsrichtung ausgerichtete Achse rotierend antreibbaren Tragkörpers befestigt sind, der sich zumindest annähernd über die gesamte Arbeitsbreite der Aufnahmeeinrichtung erstreckt. Zur Einleitung einer Verteilfunktion in einem mittleren Bereich des Emtegutschwades der Aufnahmeeinrichtung sieht die Erfindung vor, dass benachbarte Förderzinken in einem mittleren Bereich der Aufnahmeeinrichtung symmetrisch zu einer in Fahrtrichtung weisenden Längsmittelebene der Aufnahmeeinrichtung in Bewegungsrichtung der Förderzinken nachlaufend angeordnet sind. Durch eine solche Verteilung der Zinken auf der Oberfläche eines rotierend angetriebenen Tragkörpers der Aufnahmeeinrichtung wird dem Erntegut schon bei der Auf nahme vom Boden der Feld- oder Wiesenfläche ein seitlich nach außen gerichteter Bewegungsimpuls erteilt. Es stellt sich also schon bei der Aufnahme des Erntegutes eine gleichmäßigere Schwadhöhe des einzuziehenden Erntegutschwades ein. Zur Verringerung von Randbereichen des Emtegutschwades mit geringer Erntegutmenge sieht es die Erfindung vor, dass benachbarte Förderzinken in einem äußeren Bereich jeweils wiederum symmetrisch zu einer Längsmittelebene der Aufnahmeeinrichtung vorlaufend angeordnet sind. Erkenntnisse aus der Praxis gehen davon aus, dass der Übergang von dem mittleren Bereich in den äußeren Bereich bei etwa 60 bis 80 % der wirksamen Arbeitsbreite des Tragkörpers liegt.

Zur Vermeidung von unnötig hohem konstruktivem Aufwand zeigt die Erfindung einen Weg auf, der die Anbringung der Förderzinken auf der Oberfläche eines rohrförmigen Tragkörpers vorsieht, welche vorzugsweise einen kreisrunden Rohrquerschnitt aufweist. Eine vorteilhafte Befestigung der Förderzinken auf der Oberfläche des Tragkörpers wird dadurch erreicht, dass die Förderzinken durch eine von außerhalb des Tragkörpers in einen fest mit dem Tragkörper verbundenen Gewindeabschnitt einschraubbare Befestigungsschraube auf der Oberfläche des Tragkörpers angebracht sind. Der Gewindeabschnitt zur Aufnahme der Befestigungsschrauben für die Förderzinken ist dazu vorteilhafterweise als eine Nietmutter ausgeführt, welche von außen in den rohrförmigen Tragkörper eingesetzt und vernietet werden kann. Hierdurch erreicht man eine Befestigungsart, die auch im Falle einer Beschädigung den Austausch der Nietmutter erlaubt.

Gemäß einer weiteren vorteilhaften Ausgestaltung der Erfindung ist es vorgesehen, bei der Befestigung der Förderzinken auf der Oberfläche des Tragkörpers eine Verdrehsicherung für die Förderzinken einzusetzen. Eine erste Ausführungsform geht dabei von einem Formstück aus, welches durch die Anlage an der Oberflächenkontur des Tragkörpers eine Verdrehung ausschließt. Bei einer weiteren Ausführungsform ist als Verdrehsicherung ein Halteblech vorgesehen, das durch eine zusätzliche Befestigung an der jeweils vor- oder nachlaufenden Befestigungsstelle eines Förderzinkens gegen Verdrehen gesichert ist.

Weitere Vorteile und Einzelheiten der Erfindung ergeben sich aus den Unteransprüchen und einem in der Zeichnung dargestellten Ausführungsbeispiel, das im folgenden beschrieben wird.
In der Zeichnung zeigt:
- **Fig. 1:**: eine Seitenansicht einer erfindungsgemäßen landwirtschaftliche Erntemaschine mit einer Aufnahmeeinrichtung zur Aufnahme von Erntegut;
- **Fig. 2:**: eine perspektivische Ansicht eines Tragkörpers einer Aufnahmeeinrichtung nach Fig. 1, wobei eine Zinkenreihe schematisch in Form einer Strichlinie dargestellt ist;
- **Fig. 3:**: eine perspektivische Darstellung einer ersten Ausführungsform der Befestigung der Förderzinken auf dem Tragkörper nach Fig. 1.
- **Fig. 4:**: eine perspektivische Darstellung einer ersten Ausführungsform der Befestigung der Förderzinken auf dem Tragkörper nach Fig.1;
- **Fig. 5:**: eine abgebrochene Darstellung einer Befestigungsstelle eines Förderzinkens nach Fig.2;

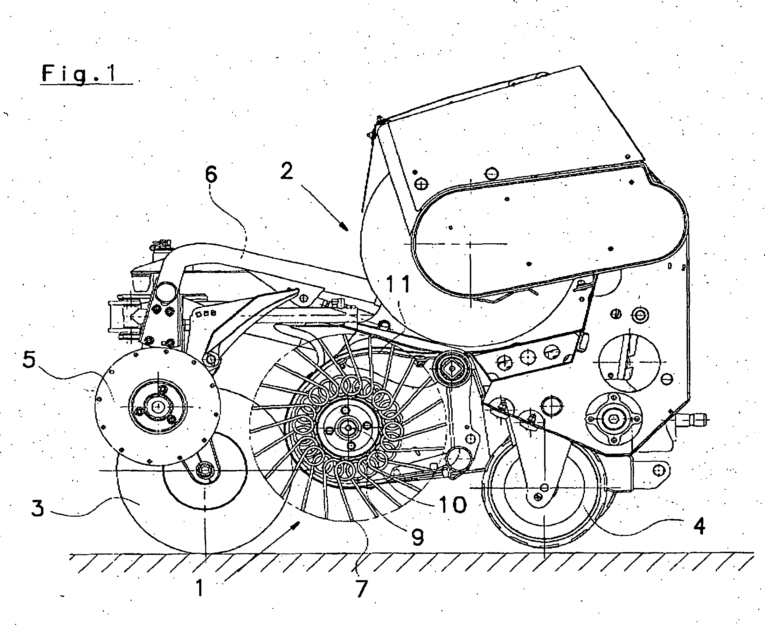

Ein Ausführungsbeispiel einer landwirtschaftlichen Erntemaschine ist in Fig.1 in Form eines Vorsatzgerätes eines Feldhäckslers näher veranschaulicht. Das mit einer Aufnahmeeinrichtung 1 ausgestattete Vorsatzgerät dient der Aufnahme von halmförmigem Erntegut auf einer Feld- oder Wiesenfläche, welches dann beispielsweise durch die Unterstützung eines weiteren Förderers 2 an den nicht dargestellten Feldhäcksler zur Zerkleinerung weiter gefördert wird. Als landwirtschaftliche Erntemaschine kann der Erfindung aber ebenso eine Ballenpresse oder ein Ladewagen zugrunde gelegt sein. Wie der Fig. 1 weiter zu entnehmen ist, stützt sich das Vorsatzgerät über vordere Stützräder 3 und über hintere Stützrolle 4 gegenüber dem Erdboden ab. Zur Unterstützung einer störungsfreien Aufnahme des Erntegutes von der Feld- oder Wiesenfläche ist der Aufnahmeeinrichtung 1 ein Rollenniederhalter 5 vorgeordnet, der über Tragarme 6 schwenkbar an dem Vorsatzgerät angebracht.

Die Aufnahmeeinrichtung 1 besteht aus einer Vielzahl von Förderzinken 7, welche auf der Oberfläche 8 eines rohrförmigen Tragkörpers 9 lösbar angebracht sind, wobei der Tragkörper 9 in Seitenwänden der Aufnahmeeinrichtung 1 drehbar gelagert ist und im Betrieb um eine etwa horizontal und quer zur Fahrtrichtung ausgerichtete Achse 10 rotierend angetrieben wird. Umgeben ist der Tragkörper 9 mit den aufgeschraubten Förderzinken 7 von Abstreiferblechen 11, welche Seite an Seite quer zur Fahrtrichtung der landwirtschaftlichen Erntemaschine angeordnet sind, wobei zwischen zwei benachbarten Abstreiferblechen 11 ein Zwischenräume ausgebildet sind, durch die die Förderzinken 7 nach außen hervorragen und somit das aufgenommene Erntegut an der Oberseite der Abstreiferbleche 11 entlang führen bzw. einem nachfolgenden Förderer 2 oder einer Gutbearbeitungseinrichtung zuführen.

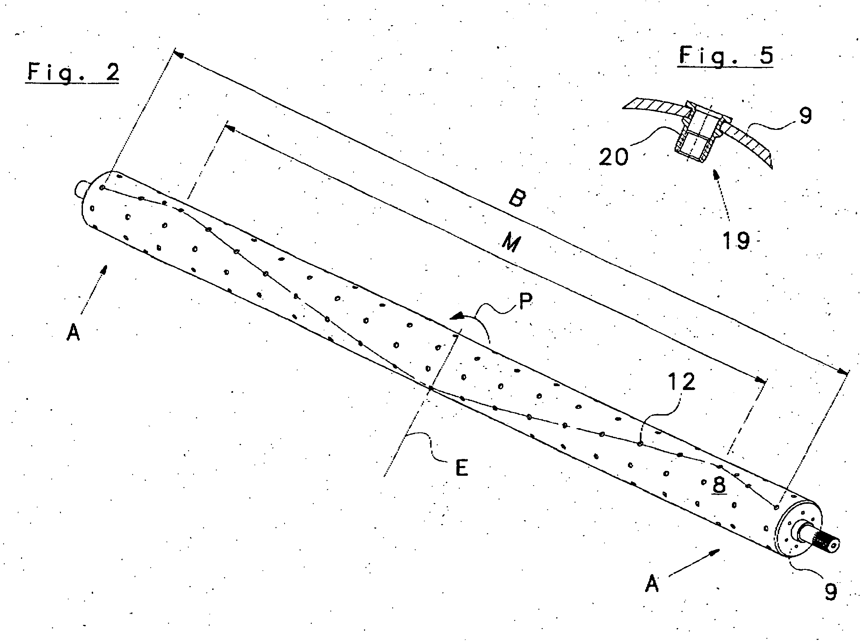

Fig.2 zeigt den rohrförmigen Tragkörper 9 der Aufnahmeeinrichtung 1 in einer perspektivischen Darstellung, wobei der Tragkörper 8 jedoch aus Gründen einer besseren Übersichtlichkeit ohne die üblicherweise auf der Oberfläche 8 aufgeschraubten Förderzinken 7 dargestellt ist. Auf der Oberfläche 8 des Tragkörpers 9 sind eine Vielzahl von Bohrungen 12 angebracht, die allesamt der Befestigung der Fördezinken 7 dienen. Zur Verdeutlichung der Zusammenhänge sind die zur Zinkenreihe zugehörigen Bohrungen 12 mit einer Strichlinie verbunden. Anhand der die Bohrungen 12 verbindenden Strichlinie wird deutlich, dass quer zur Fahrtrichtung der landwirtschaftlichen Erntemaschine benachbarte Förderzinken 7 in einem mittleren Bereich M ausgehend von und symmetrisch zu einer zur Fahrtrichtung parallelen Längsmittelebene nachlaufend versetzt angeordnet sind. Dies hat zur Folge, dass dem Erntegut bei der Aufnahme durch eine Drehbewegung des Tragkörpers 9 entsprechend der Pfeilrichtung P ein Bewegungsimpuls erteilt wird, der zu einem Auseinanderziehen des Erntegutschwades und damit zu einer gleichmäßigeren Ausformung des Erntegutschwades führt, bevor das Erntegut einer nachfolgenden Gutbearbeitungseinrichtung aufgegeben wird. Fig.2 zeigt, dass die Bohrungen 12 im mittleren Bereich M ausgehend von und symmetrisch zu einer Mittelebene E des Tragkörpers 9 um einen gleichmäßigen Betrag nachlaufend versetzt sind. Wie weiterhin aus Fig.2 hervorgeht, kehrt sich die beschriebene, nachlaufend versetzte Anordnung der Bohrungen 12 außerhalb des mittleren Bereiches M in äußeren Bereichen A um in eine vorlaufend versetzte Anordnung. Dadurch ergibt sich an den äußeren Förderzinken 7 bei der Aufnahme des Erntegutes eine zusammenziehende Wirkung, so dass äußere, aus dünnen Erntegutschichten bestehende Abschnitte des Erntegutschwades etwas weiter zur Mitte verlagert werden und somit dicker werden. Eine vorteilhafte Gestaltung geht davon aus, dass der mittlere Bereich M etwa 60 bis 80 % wirksamen Arbeitsbreite B ausmacht.

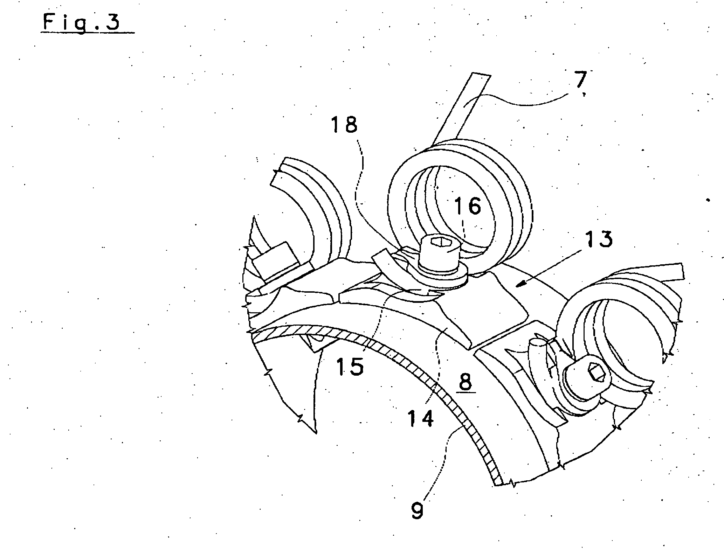

In Fig. 3 ist in einer abgebrochenen, perspektivischen und vergrößerten Darstellung die Befestigung von Förderzinken 7 auf der Oberfläche 8 des Tragkörpers 9 wiedergegeben. Dabei ist es vorgesehen, zur Befestigung des Förderzinken 7 eine Verdrehsicherung 13 einzusetzen, welche als ein Formstück 14 ausgebildet ist. Durch die Anlage des Formstückes 14 an die beispielsweise kreisrund ausgeführte Kontur des Tragkörpers 9 wird eine Verdrehung des Förderzinkens 7 wirksam verhindert. Bei der Befestigung des Förderzinkens 7 liegt eine Befestigungsöse 15 in einer Aussparung des Formstückes 14 und wird dann durch das Festdrehen der Befestigungsschraube 16 sicher arretiert.

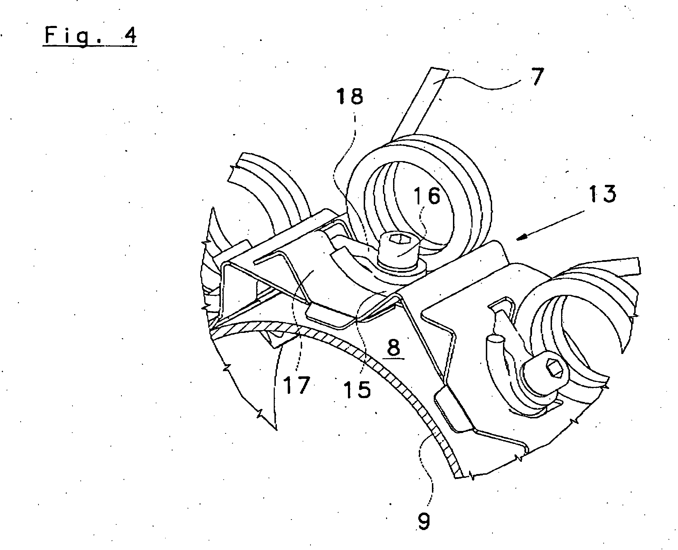

In Fig. 4 wird eine weitere Ausführungsform veranschaulicht, bei der als Verdrehsicherung 13 ein Halteblech 17 eingesetzt ist. Dieses gekantete Halteblech 17 weist in seinem mittleren Bereich eine Anlagefläche für die Befestigungsöse 15 des Förderzinkens 7 auf, so dass auch hier nach dem Festdrehen der Befestigungsschraube 16 eine sichere Arretierung des Förderzinkens 7 vorliegt. Zur Vermeidung einer Verdrehbewegung des Förderzinkens 7 erstreckt sich das Halteblech 17 bis zur Befestigungsstelle eines vor- oder nachlaufenden Förderzinkens 7 und wird dort bei der Befestigung des Förderzinkens 7 gegen Verdrehung gehalten. Unterhalb des Schraubenkopfes der Befestigungsschraube 16 (Fig.3 und 4) ist noch eine Sicherung 18 der Befestigungsschraube 16 gegen unbeabsichtigtes Lösen vorgesehen.

Aus Fig.5 wird die Anbringung von Gewindeabschnitten 19 innerhalb des Tragkörpers 9 deutlich. Ein als Nietmutter 20 ausgebildeter Gewindeabschnitt 19 kann von außen in den Tragkörper 9 eingesetzt werden und ist nach dem Vernieten fest mit diesem verbunden. Ein solches Einsetzen eines Gewindeabschnittes 19 in den rohrförmigen Tragkörper 9 stellt auch im Reparaturfall eine sinnvolle Lösungsmöglichkeit dar.

## Patentansprüche

1. Landwirtschaftliche Erntemaschine mit einer Aufnahmeeinrichtung (1) zur Aufnahme von auf einer Feld- oder Wiesenfläche liegendem Erntegut und zur Weitergabe an eine nachfolgende Gutbearbeitungseinrichtung, mit einer Vielzahl von Förderzinken (7), die zur Aufnahme des Erntegutes um eine etwa horizontal und quer zur Fahrt- und Arbeitsrichtung ausgerichtete Achse (10) auf einer vorgegebenen Bahn angetrieben bewegbar sind, wobei quer zur Fahrtrichtung benachbarte Förderzinken in Bewegungsrichtung versetzt zueinander angeordnet sind, mit einer Vielzahl von Abstreiferblechen (11), die Seite an Seite quer zur Fahrt- und Arbeitsrichtung angeordnet sind, wobei zwischen den jeweiligen Abstreiferblechen (11) Zwischenräume gebildet sind, durch die die Förderzinken (7) von innen nach außen hervorragen und das Erntegut an der Oberseite der Abstreiferbleche (11) entlang führen, **dadurch gekennzeichnet, dass** die Förderzinken (7) auf der Oberfläche (8) eines rohrförmig gestalteten und um die etwa horizontal und quer zur Fahrt- und Arbeitsrichtung ausgerichtete Achse (10) rotierend antreibbaren Tragkörpers (9) befestigt sind, der sich zumindest annähernd über die gesamte Arbeitsbreite der Aufnahmeeinrichtung (1) erstreckt und dass quer zur Fahrtrichtung benachbarte Förderzinken (7) in einem mittleren Bereich (M) symmetrisch zu einer in Fahrtrichtung gerichteten Längsmittelebene der Aufnahmeeinrichtung (1) nachlaufend versetzt und in einem äußeren Bereich (A) vorlaufend versetzt angeordnet sind.

2. Landwirtschaftliche Erntemaschine nach Anspruch 1, **dadurch gekennzeichnet, dass** der mittlere Bereich (M) vorzugsweise etwa 60 bis 80 % der wirksamen Arbeitsbreite (B) des Tragkörpers (9) aufweist.

3. Landwirtschaftliche Erntemaschine nach Anspruch 1, **dadurch gekennzeichnet, dass** jeder Förderzinken (7) auf der Oberfläche (8) durch eine Befestigungsschraube (16) gehaltert ist, welche in einen fest mit dem Tragkörper (9) verbundenen Gewindeabschnitt (19) einschraubbar ist.

4. Landwirtschaftliche Erntemaschine nach Anspruch 3, **dadurch gekennzeichnet, dass** die Gewindeabschnitte (19) des Tragkörpers (9) von einer Nietmutter (20) gebildet werden, welche von außen her in das Innere des Tragkörpers (9) einführbar sind und durch eine von außen durchführbare Vernietung eine feste Verbindung der Nietmutter (20) mit dem Tragkörper (9) erreichbar ist.

5. Landwirtschaftliche Erntemaschine nach einem der Ansprüche 1 bis 4, **dadurch gekennzeichnet, dass** zur Befestigung der Förderzinken (7) auf der Oberfläche (8) des Tragkörpers (9) eine Verdrehsicherung (13) vorgesehen ist.

6. Landwirtschaftliche Erntemaschine nach Anspruch 5, **dadurch gekennzeichnet, dass** als Verdrehsicherung (13) ein durch die Anlage auf der Oberfläche (8) des Tragkörpers (9) eine Drehbewegung des Förderzinkens (7) ausschließendes Formstück (14) eingesetzt ist.

7. Landwirtschaftliche Erntemaschine nach Anspruch 6, **dadurch gekennzeichnet, dass** das Formstück (14) an seiner der Oberfläche (8) des Tragkörpers (9) abgewandten Seite eine, eine Befestigungsöse (15) des Förderzinkens (7) auf nehmende Aussparung aufweist.

8. Landwirtschaftliche Erntemaschine nach Anspruch 5, **dadurch gekennzeichnet, dass** als Verdrehsicherung (13) ein Halteblech (17) einsetzbar ist, welches durch die zusätzliche Befestigung an der jeweils vor- oder nachlaufenden Befestigungsstelle eines Förderzinkens (7) eine Verdrehbewegung ausschließt.

9. Landwirtschaftliche Erntemaschine nach einem der Ansprüche 1 bis 8, **dadurch gekennzeichnet, dass** der Tragkörper (9) einen kreisrunden Rohrquerschnitt aufweist.

## Claims

1. Agricultural harvester having a pick-up arrangement (1) for picking up crop for harvesting lying on a surface of a field or meadow and for passing it on to a downstream crop handling arrangement, having a plurality of feeding tines (7) which, to pick up the crop for harvesting, can be moved, under drive, along a preset path about an axis (10) which is aligned approximately horizontally and transversely to the direction of travel and operation, feeding tines which are adjoining transversely to the direction of travel being arranged with a stagger relative to one another in the direction of movement, and having a plurality of wiper plates (11) which are arranged side by side transversely to the direction of travel and operation, gaps being formed between the respective wiper plates (11) through which the feeding tines (7) project from the inside outwards and guide the crop for harvesting along on the upper side of the wiper plates (11), **characterised in that** the feeding tines (7) are fastened to the surface (8) of a supporting body (9) which is of a tubular form, which can be driven in rotation about the axis (10) which is aligned approximately horizontally and transversely to the direction of travel and operation, and which extends across approximately the entire working width of the pick-up arrangement (1), and **in that**, symmetrically to a longitudinal centre plane of the pick-up arrangement (1) which is directed in the direction of travel, feeding tines (7) which are adjoining transversely to the direction of travel are arranged with a back-stagger in a central region (M) and are arranged with a forward stagger in an outer region (A).

2. Agricultural harvester according to claim 1, **characterised in that** the central region (M) preferably occupies approximately 60 to 80% of the effective working width (B) of the supporting body (9).

3. Agricultural harvester according to claim 1, **characterised in that** each feeding tine (7) is mounted on the surface (8) by means of a fastening screw or bolt (16) which can be screwed securely into a section of thread (19) solidly connected to the supporting body (9).

4. Agricultural harvester according to claim 3, **characterised in that** the sections of thread (19) belonging to the supporting body (9) are formed by rivet bushes (20) which can be inserted into the interior of the supporting body (9) from outside, and a solid connection can be made between the rivet bushes (20) and the supporting body (9) by a riveting operation which can be performed from outside.

5. Agricultural harvester according to one of claims 1 to 4, **characterised in that** an anti-twist locking device (13) is provided to allow the feeding tines (7) to be fastened to the surface (8) of the supporting body (9).

6. Agricultural harvester according to claim 5, **characterised in that** what is used as an anti-twist locking device (13) is a fitting (14) which, by bearing against the surface (8) of the supporting body (9), rules out the possibility of the feeding tine (7) moving in rotation.

7. Agricultural harvester according to claim 6, **characterised in that**, on its side remote from the surface (8) of the supporting body (9), the fitting (14) has a recess which receives a fastening loop (15) of the feeding tine (7).

8. Agricultural harvester according to claim 5, **characterised in that** what can be used as an anti-twist locking device (13) is a mounting plate (17) which rules out the possibility of a twisting movement by providing an additional fastening at the forward staggered or back-staggered fastening point, as the case may be, of a feeding tine (7).

9. Agricultural harvester according to one of claims 1 to 8, **characterised in that** the supporting body (9) is circular in cross-section.

## Revendications

1. Moissonneuse agricole comportant une installation de ramassage (1) pour ramasser les produits de récolte répartis à la surface d'un champ ou d'un pré et pour les transférer à une installation de préparation de produits, en aval, comprenant :
- de nombreuses dents d'entraînement (7) qui, pour ramasser les produits, sont entraînées autour d'un axe (10) sensiblement horizontal et transversal à la direction de déplacement et de travail suivant une trajectoire prédéfinie,
* les dents d'entraînement, voisines dans la direction transversale à la direction de déplacement, étant décalées les unes des autres selon la direction de mouvement,
* de nombreuses tôles de raclage (11) installées côte à côte, transversalement à la direction de déplacement et de travail,
* des intervalles entre les différentes tôles de raclage (11), à travers lesquels passent les dents de transfert (7), de l'intérieur vers l'extérieur conduisant les produits sur la surface extérieure de la tôle de raclage (11),
machine **caractérisée en ce que**
les dents de transfert (7) sont fixées à la surface (8) d'un organe de support (9), de forme tubulaire et entraîné en rotation autour d'un axe (10) aligné sensiblement transversalement à la direction de déplacement et de travail, cet organe de support s'étendant au moins sensiblement sur toute la largeur de travail de l'installation de ramassage (1), et
les dents d'entraînement (7), voisines transversalement à la direction de déplacement dans la zone médiane (M) sont dirigées symétriquement par rapport à la direction de déplacement, dans le plan longitudinal médian de l'installation de ramassage (1), en étant décalées en arrière alors que dans la zone extérieure (A), les dents sont décalées dans le sens de l'avance.

2. Machine agricole de récolte selon la revendication 1,
**caractérisée en ce que**
la zone médiane (M) représente de préférence entre 60 et 80 % de la largeur de travail active (B) de l'organe de support (9).

3. Machine agricole de récolte selon la revendication 1,
**caractérisée en ce que**
chaque dent d'entraînement (7) est tenue à la surface (8) par une vis de fixation (16) qui se visse dans un segment fileté (19) solidaire de l'organe de support (9).

4. Machine agricole de récolte selon la revendication 3,
**caractérisée en ce que**
les segments filetés (19) de l'organe de support (9) sont constitués par un écrou-rivet (20) qui s'introduit à partir de l'extérieur à l'intérieur de l'organe de support (9) et est accroché solidairement au corps de support (9) par le rivetage exécuté à partir de l'extérieur.

5. Machine agricole de récolte selon l'une des revendications 1 à 4,
**caractérisée en ce qu'**
un blocage en rotation (13) est prévu pour fixer les dents d'entraînement (7) à la surface (8) de l'organe de support (9).

6. Machine agricole de récolte selon la revendication 5,
**caractérisée en ce que**
la fixation en rotation (13) utilise une pièce de forme (14) s'appuyant sur la surface (8) de l'organe de support (9), et interdisant tout mouvement de rotation de la dent d'entraînement (7).

7. Machine agricole de récolte selon la revendication 6,
**caractérisée en ce que**
sur son côté non tourné vers la surface (8) de l'organe de support (9), la pièce de forme (14) comporte un dégagement recevant l'oeillet de fixation (15) de la dent d'entraînement (7).

8. Machine agricole de récolte selon la revendication 5,
**caractérisée en ce que**
le moyen de blocage en rotation (13) est une tôle de retenue (17) qui interdit tout mouvement de rotation par une fixation supplémentaire à un point de fixation en amont ou en aval de la dent de transfert (7).

9. Machine agricole de récolte selon l'une des revendications 1 à 8,
**caractérisée en ce que**
l'organe de support (9) tubulaire a une section circulaire.
